# EUROPEAN PATENT APPLICATION

(11) **EP 3 139 197 A1**
(43) Date of publication of application: **08.03.2017**
(21) Application number: 14890889.0
(22) Date of filing: 21.08.2014
(51) Int. Cl.: G01S 15/08

(54) **TERMINAL AND RANGING METHOD THEREFOR**

(30) Priority: 30.04.2014 CN 201410182594
(71) Applicant: ZTE Corporation, Shenzhen, Guangdong 518057 (CN)
(72) Inventor: LIANG, Chao, Shenzhen Guangdong 518057 (CN); XU, Dongyan, Shenzhen Guangdong 518057 (CN); WANG, Jinjun, Shenzhen Guangdong 518057 (CN)
(74) Representative: Brunazzi, Stefano
(86) International application number: PCT/CN2014/084947
(87) International publication number: WO 2015/165176

(57) **Abstract**

The disclosure provides a terminal and a method for ranging using. The terminal comprises an electro-acoustic transducer (1), which has a vibrating component (11), an ultrasonic receiving component (13), a driving component (12) and a control component (14) arranged in the terminal, wherein the control component (14) receives a ranging instruction, controls the driving component (12) to drive the vibrating component (11) to output an ultrasonic signal, receives an ultrasonic signal output by the ultrasonic receiving component (13) returned after colliding, by the output ultrasonic signal, with a target object, and calculates a distance between the terminal and the target object.

## Description

### Technical Field

The disclosure relates to the field of terminal communications, and in particular to a terminal and a method for ranging using a terminal.

### Background

A terminal generally is equipped with an electro-acoustic transducer, which is configured to convert an electrical signal into an acoustic signal; what the electro-acoustic transducer in the terminal sends out is an audible sound, of which the highest frequency is 20KHz and which cannot be used to measure a distance because a frequency of the audible sound is low. During a ranging of the terminal, an external ultrasonic transceiving device is generally needed to send and receive an ultrasonic wave so as to calculate the distance, thereby causing a carriage inconvenience to users; further, the ranging cannot be implemented without an ultrasonic transceiving device.

### Summary

The embodiments of the disclosure provide a terminal and a method for ranging using the terminal, so as to at least solve a problem in the related art that the terminal needs an external ultrasonic transceiving device to measure a distance using an ultrasonic wave.

To achieve the above purpose, one embodiment of the disclosure provides a terminal, including an electro-acoustic transducer, wherein the electro-acoustic transducer includes:
a shell;
a vibrating component, which is arranged in the shell and is configured to output an ultrasonic signal;
a driving component, which is connected with the vibrating component and is configured to drive the vibrating component to output the ultrasonic signal;
an ultrasonic receiving component, which is arranged in the shell and is configured to receive an ultrasonic signal returned after the ultrasonic signal collides with a target object and output the returned ultrasonic signal to a control component; and
the control component, which is configured to receive a ranging instruction, control the driving component to drive the vibrating component to output the ultrasonic signal, receive the returned ultrasonic signal, after the ultrasonic signal collides with a target object, output by the ultrasonic receiving component, and calculate a distance between the terminal and the target object.

In an example embodiment, the driving component includes an ultrasonic voice coil and an ultrasonic magnetic driver, wherein the ultrasonic voice coil is connected with the vibrating component and is configured to drive the vibrating component to output the ultrasonic signal and the ultrasonic magnetic driver is matched with the ultrasonic voice coil and is configured to drive the ultrasonic voice coil to vibrate.

In an example embodiment, the vibrating component includes an ultrasonic vibrating diaphragm, which outputs the ultrasonic signal by vibration.

In an example embodiment, the electro-acoustic transducer includes an audible sound vibrating diaphragm, which is arranged in parallel to the ultrasonic vibrating diaphragm or into which the ultrasonic vibrating diaphragm is embedded.

In an example embodiment, the ultrasonic vibrating diaphragm and the audible sound vibrating diaphragm are concentric and a through hole is opened on the audible sound vibrating diaphragm, wherein a shape of the through hole and an area of the through hole are the same as a shape of the ultrasonic vibrating diaphragm and an area of the ultrasonic vibrating diaphragm.

In an example embodiment, the ultrasonic receiving component includes a metallic receiving plate, which is configured to receive the returned ultrasonic signal and which is embedded into the shell or integrated with the shell.

The embodiment of the disclosure further provides a method for ranging using a terminal, including:
when receiving a ranging instruction, a control component acquiring state information of a user and controlling a driving component to drive a vibrating component to output, according to a preset rule, an ultrasonic signal;
an ultrasonic receiving component receiving an ultrasonic signal returned after the output ultrasonic signal collides with a target object and outputting the returned ultrasonic signal to the control component; and
the control component calculating a distance between the terminal and the target object and feeding back the calculated distance to the user.

In an example embodiment, when receiving a ranging instruction, the control component acquiring the state information of the user and controlling the driving component to drive the vibrating component to output, according to the preset rule, the output ultrasonic signal includes:
when receiving the ranging instruction, the control component controlling the vibrating 2 component to output the ultrasonic signal at a regular time, identifying a movement state of the user and acquiring in real time a movement speed and a movement direction of the user.

In an example embodiment, the control component calculating the distance between the terminal and the target object includes:
the control component calculating, when the user is in the movement state, a first time difference between a time of outputting the output ultrasonic signal and a time of receiving the returned ultrasonic signal; and
the control component calculating the distance according to the movement speed and movement direction of the user, the first time difference and an ultrasonic speed.

In an example embodiment, the control component calculating the distance between the terminal and the target object includes:
the control component receiving, when the user is in a non-movement state, two adjacent returned ultrasonic signals output by the ultrasonic receiving component, wherein the two returned ultrasonic signals are respectively called a first ultrasonic signal and a second ultrasonic signal, an outputting time of the first ultrasonic signal is earlier than an outputting time of the second ultrasonic signal by a time interval;
the control component calculating a second time difference between the time of outputting the first ultrasonic signal and a time of receiving the returned first ultrasonic signal and a third time difference between the time of outputting the second ultrasonic signal and a time of receiving the returned second ultrasonic signal; and
the control component calculating the distance according to the second time difference, the third time difference, the time interval and an ultrasonic speed.

In the embodiments of the disclosure, a vibrating component, an ultrasonic receiving component, a driving component and a control component are arranged in an electro-acoustic transducer in a terminal, wherein the control component receives a ranging instruction, controls the driving component to drive the vibrating component to output an ultrasonic signal, receives an ultrasonic signal output by the ultrasonic receiving component returned after colliding, by the output ultrasonic signal, with a target object, and calculates the distance between the terminal and the target object. The embodiments of the disclosure arrange all hardware structures needed by the terminal to measure the distance in the electro-acoustic transducer utilizing the structure features of the electro-acoustic transducer, thereby making the terminal capable of measuring the distance using an ultrasonic wave without an external ultrasonic transceiving device; therefore, it is more convenient to measure the distance using the terminal provided in the embodiment of the disclosure.

### Brief Description of the Drawings

Fig. 1 is a structural schematic diagram of a terminal according to a first embodiment of the disclosure;
Fig. 2 is a structural schematic diagram of a terminal according to a second embodiment of the disclosure;
Fig. 3 is a structural schematic diagram of a vibrating component in the terminal according to the second embodiment the disclosure shown in Fig. 2;
Fig. 4 is a structural schematic diagram of a terminal according to a third embodiment of the disclosure;
Fig. 5 is a schematic diagram of embedding an ultrasonic vibrating diaphragm into an audible sound vibrating diaphragm in the terminal according to the third embodiment of the disclosure shown in Fig. 4;
Fig. 6 is a flowchart of a method for ranging using a terminal according to a first embodiment of the disclosure; and
Fig. 7 is a flowchart of a method for ranging using a terminal according to a second embodiment of the disclosure.

The purpose implementation, the function features and the advantages of the disclosure are described below in further detail in combination with embodiments by reference to accompanying drawings.

### Detailed Description

It should be understood that specific embodiment described below are simply to illustrate the disclosure but not to limit the disclosure.

Those skilled in the art can understand that, in the following embodiments of a terminal and a method for ranging using the terminal according to the embodiments of the disclosure, the terminal involved has been installed with a corresponding customized application for implementing ranging in the terminal according to the embodiments of the disclosure.

The terminal involved in the embodiments of the disclosure includes but not limited to a mobile phone, a game console, a computer, a tablet computer and other terminals. The specific type of the terminal is not limited in the embodiments.

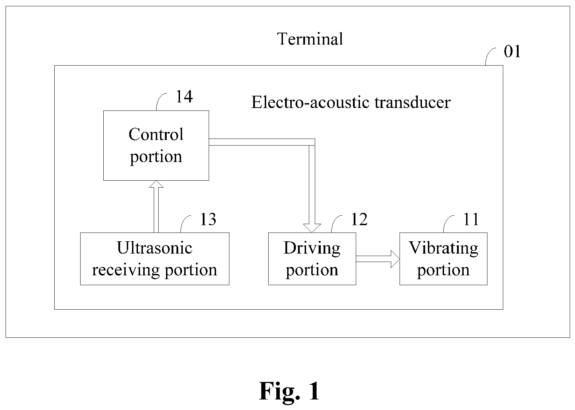

A first embodiment of disclosure provides a terminal, which includes an electro-acoustic transducer, as shown in Fig. 1, wherein the electro-acoustic transducer 01 includes:
a shell (not shown in Fig. 1), on which a sound hole may be opened and the sound hole is used for transmitting an output ultrasonic signal from the electro-acoustic transducer 01 to outside, and a size of the sound hole and a shape of the sound hole are not limited;
a vibrating component 11, which is arranged in the shell and is configured to output an ultrasonic signal, wherein the vibrating component 11 may be arranged at a position near the sound hole of the shell so that the ultrasonic signal output from the vibrating component 11 can be transmitted to outside immediately from the sound hole, thereby reducing the loss of the ultrasonic signal;
a driving component 12, which is connected with the vibrating component 11 and is configured to drive the vibrating component 11 to output the ultrasonic signal, wherein the driving component 12 converts an electric energy into a mechanical energy to drive the vibrating component 11 to output the ultrasonic signal;
an ultrasonic receiving component 13, which is arranged in the shell and is configured to receive an ultrasonic signal returned after collision with a target object and output the ultrasonic signal to a control component; for example, the ultrasonic receiving component 13 may be of a structure having a cambered surface and the cambered surface faces a return direction of an ultrasonic wave, or, the ultrasonic receiving component 13 is of a trumpet structure, of which one end with a big cross-section area faces a return direction of a ultrasonic wave; the ultrasonic receiving component 13 may also be of other shapes applicable for receiving the returned ultrasonic signal; and
the control component 14, which is arranged in the shell and is configured to receive a ranging instruction, control the driving component 12 to drive the vibrating component 11 to output the ultrasonic signal, receive the ultrasonic signal output by the ultrasonic receiving component 13 returned after the ultrasonic signal collides with the target object, and calculate a distance between the terminal and the target object; for example, when the control component 14 receives the ranging instruction from the terminal, the control component 14 controls the driving component 12 to drive the vibrating component 11 to output the ultrasonic signal, which will be returned after colliding with the target object; then the ultrasonic receiving component 13 receives the ultrasonic signal returned after the ultrasonic signal collides with the target object and outputs the returned ultrasonic signal to the control component 14; finally, the control component 14 receives the ultrasonic signal output by the ultrasonic receiving component 13 returned after the ultrasonic signal collides with the target object and calculates the distance between the terminal and the target object.

This embodiment arranges the vibrating component 11, the ultrasonic receiving component 13, the driving component 12 and the control component 14 in the electro-acoustic transducer 01 in the terminal, wherein the control component 14 receives the ranging instruction, controls the driving component 12 to drive the vibrating component 11 to output the ultrasonic signal, receives the ultrasonic signal output by the ultrasonic receiving component 13 returned after the ultrasonic signal collides with the target object, and calculates the distance between the terminal and the target object. This embodiment arranges all hardware structures needed by the terminal to measure a distance in the electro-acoustic transducer 01 utilizing structure features of the electro-acoustic transducer 01, thereby making the terminal capable of measuring the distance using an ultrasonic wave without an external ultrasonic transceiving device; therefore, it is more convenient to measure the distance using the terminal according to this embodiment.

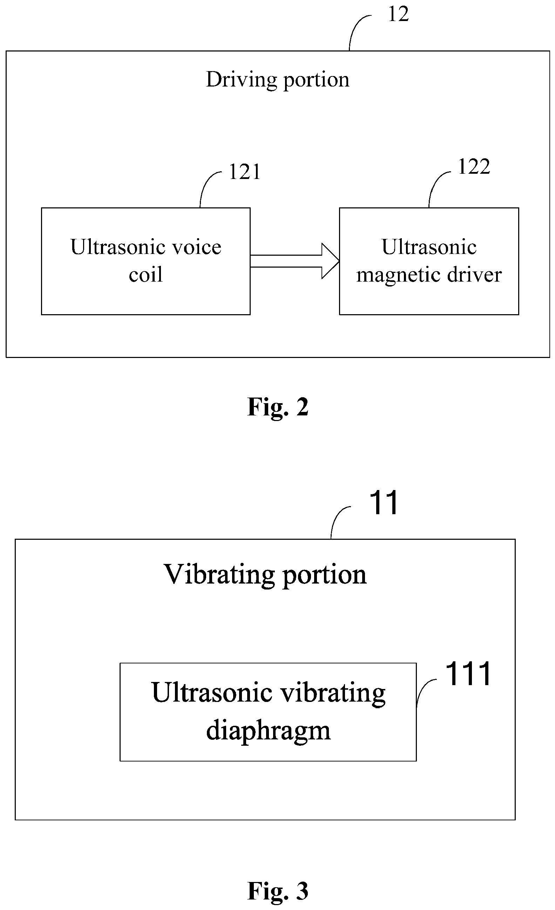

Refer to Fig. 2, which shows the terminal according to a second embodiment of the disclosure, a difference between this embodiment and the first embodiment lies in that the driving component 12 includes an ultrasonic voice coil 121 and an ultrasonic magnetic driver 122 on a basis of the first embodiment.

The ultrasonic voice coil 121 is connected with the vibrating component 11 and is configured to drive the vibrating component 11 to output the ultrasonic signal; when the ultrasonic voice coil 121 is driven to vibrate, a connection between the vibrating component 11 and the ultrasonic voice coil 121 causes the vibrating component 11 to output the ultrasonic signal under the force of the vibration of the ultrasonic voice coil 121. In an example embodiment of the disclosure, a ultrasonic vibrating diaphragm may further include a damper which is configured to limit the ultrasonic voice coil 121 in a correction position.

The ultrasonic magnetic driver 122 is matched with the ultrasonic voice coil 121 and is configured to drive the ultrasonic voice coil 121 to vibrate; for example, the ultrasonic magnetic driver 122 includes a circular magnetic steel and a stem; the ultrasonic voice coil 121 is located in a magnetic gap between the circular magnetic steel and the stem; when an electric current flows through the ultrasonic voice coil 121, the ultrasonic voice coil 121 reciprocates in the magnetic gap, thereby driving the vibrating component 11 to reciprocate (namely vibrate).

In this embodiment, the driving component 12 includes the ultrasonic voice coil 121 and the ultrasonic magnetic driver 122, and the ultrasonic voice coil 121 and the ultrasonic magnetic driver 122 can generate a stable mechanical energy to drive the vibrating component 11 to output the ultrasonic signal and can save a space of the electro-acoustic transducer 01.

As shown in Fig. 3, which is a structural schematic diagram of the vibrating component 11 in the terminal according to the second embodiment of the disclosure shown in Fig. 2; in an example embodiment of the disclosure, the vibrating component 11 includes an ultrasonic vibrating diaphragm 111, for example, a fibre membrane, a titanium alloy membrane and the like; in particular, the ultrasonic vibrating diaphragm 111 vibrates to output the ultrasonic signal. The vibrating component 11 may further include a support component, which is arranged to support the vibrating component 11; the ultrasonic vibrating diaphragm 111 is connected with the driving component 12, and the driving component 12 converts the electrical energy into the mechanical energy to drive the ultrasonic vibrating diaphragm 111 to vibrate to generate and output the ultrasonic wave.

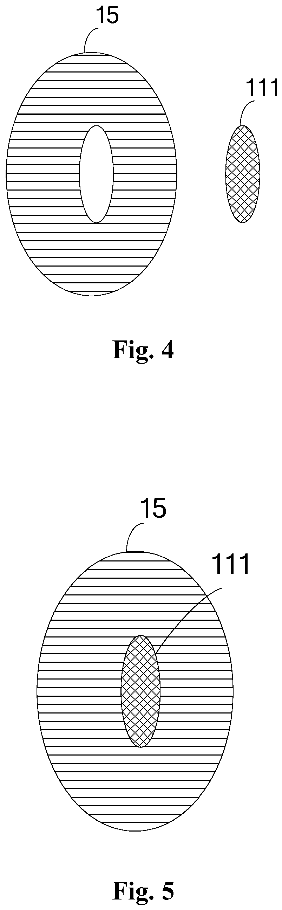

As shown in Fig. 4, which refers to the terminal according to a third embodiment of the disclosure, a difference between this embodiment and the first embodiment lies in that the electro-acoustic transducer 01 includes an audible vibrating diaphragm 15 on the basis of the first embodiment; in particular, the audible vibrating diaphragm 15 is arranged in parallel to the ultrasonic vibrating diaphragm 111 or the ultrasonic vibrating diaphragm 111 is embedded into the audible vibrating diaphragm 15.

The electro-acoustic transducer 01 in the terminal is to convert an electrical signal into an acoustic signal; therefore, the electro-acoustic transducer 01 generally has the audible vibrating diaphragm 15 and an a driver configured to drive the audible vibrating diaphragm 15 arranged in the electro-acoustic transducer 01; in particular, the driver drives the audible vibrating diaphragm 15 to vibrate to output audible sound. Since a frequency of the audible sound is further lower than that of the ultrasonic wave, the audible vibrating diaphragm 15 is much bigger than the ultrasonic vibrating diaphragm 111.

As shown in Fig. 4 and Fig. 5, Fig. 4 is a schematic diagram of arranging the ultrasonic vibrating diaphragm in parallel to then audible vibrating diaphragm in the terminal according to the disclosure, and Fig. 5 is a schematic diagram of embedding the ultrasonic vibrating diaphragm into the audible vibrating diaphragm in the terminal according to the disclosure; arranging the ultrasonic vibrating diaphragm 111 in parallel to the audible vibrating diaphragm 15 or embedding the ultrasonic vibrating diaphragm 111 into the audible vibrating diaphragm 15 can make the audible sound output by the audible vibrating diaphragm 15 and the ultrasonic wave output by the ultrasonic vibrating diaphragm 111 towards the same direction, which is convenient for a setting of the sound hole; moreover, arranging the ultrasonic vibrating diaphragm 111 in parallel to the audible vibrating diaphragm 15 or embedding the ultrasonic vibrating diaphragm 111 into the audible vibrating diaphragm 15 also can save a space of the electro-acoustic transducer 01.

As shown in Fig. 4 and Fig. 5, in an example embodiment of the disclosure, the ultrasonic vibrating diaphragm 111 and the audible sound vibrating diaphragm 15 are concentric and a through hole is opened on the audible sound vibrating diaphragm 15, the shape and area of the through hole being the same as the shape and area of the ultrasonic vibrating diaphragm 111.

The audible sound vibrating diaphragm 15 is located between the sound hole and the ultrasonic vibrating diaphragm 111, or the ultrasonic vibrating diaphragm 111 is located between the sound hole and the audible sound vibrating diaphragm 15; in an example embodiment, the audible sound vibrating diaphragm 15 is located between the sound hole and the ultrasonic vibrating diaphragm 111 in this embodiment; it should be noted that when the audible sound vibrating diaphragm 15 is located between the sound hole and the ultrasonic vibrating diaphragm 111, the audible sound vibrating diaphragm 15 needs to opened with a through hole for the ultrasonic signal output by the ultrasonic vibrating diaphragm 111 to pass through and come out from the sound hole, a shape and an area of the through hole being the same as the a shape and an area of the ultrasonic vibrating diaphragm 111.

Likewise, when the ultrasonic vibrating diaphragm 111 is embedded into the audible sound vibrating diaphragm 15, the audible sound vibrating diaphragm 15 is opened with a through hole for placing and fixing the ultrasonic vibrating diaphragm 111. It should be noted that no gap can be reserved between the ultrasonic vibrating diaphragm 111 and the audible sound vibrating diaphragm 15; therefore, in an example embodiment, a shape and an area of the through hole on the audible sound vibrating diaphragm 15 are the same as a shape and an area of the ultrasonic vibrating diaphragm 111 in this embodiment.

In this embodiment, the ultrasonic vibrating diaphragm 111 and the audible sound vibrating diaphragm 15 are concentric, which can further save the space of the electro-acoustic transducer.

In a preferred embodiment of the disclosure, the ultrasonic receiving component 13 includes a metallic receiving plate, which is configured to receive a returned ultrasonic signal and which is embedded into the shell or integrated with the shell.

Since ultrasonic signals are propagated quickly in metallic mediums, with little loss, receiving the returned ultrasonic signal using the metallic receiving plate is more efficient and suffers little loss. Moreover, the ultrasonic receiving component 13 being integrated with the shell refers that the shell can directly serve as the metallic receiving plate when the shell is made of a metal material. Therefore, embedding the metallic receiving plate into the shell or integrating the metallic receiving plate with the shell can further save the space of the electro-acoustic transducer 01.

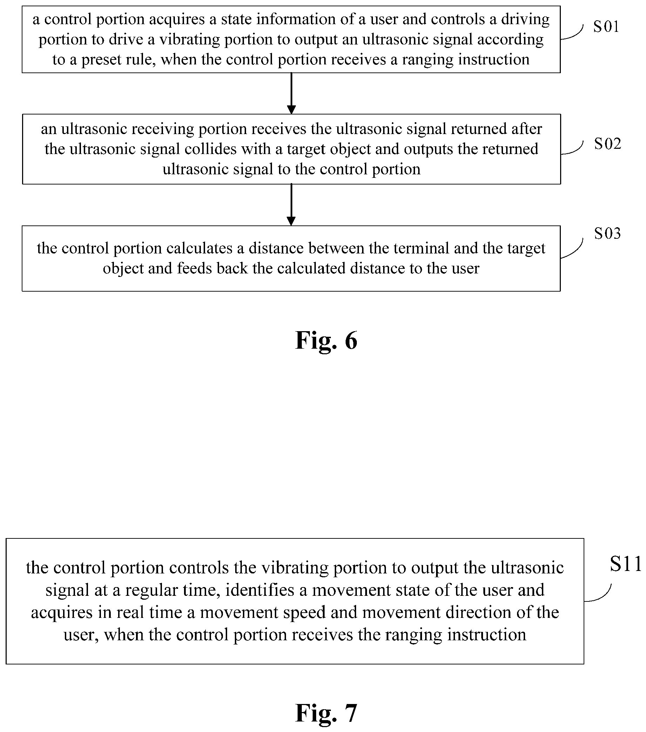

The embodiment of the disclosure further provides a method for ranging using a terminal; refer to Fig. 6, which is a method for ranging using a terminal according to a first embodiment of the disclosure, the method including:
S01: a control component acquires state information of a user and controls a driving component to drive a vibrating component to output an ultrasonic signal according to a preset rule, when the control component receives a ranging instruction.

When a user needs to measure a distance, the ranging instruction is sent to the control component through the terminal; when the control component receives the ranging instruction, the control component responds to the ranging instruction, acquires the state information of the user and meanwhile controls the driving component to drive the vibrating component to output the ultrasonic signal. In particular, the state information of the user may be a movement speed, a movement direction and the like of the user; the method for a controller to acquire the state information of the user is that an existing device (for example, a Global Positioning System (GPS) component, an acceleration sensor, a geomagnetic sensor and the like) in the terminal detects the state information of the user and transmits the state information of the user to the controller, or, a server acquires the state information of the user and transmits the state information of the user to the controller. The preset rule may be set in advance in the controller, or may be set by the user temporarily during the usage. The preset rule may include a specified frequency, a specified number of times, a specified direction and the like for outputting the ultrasonic wave.

S02: an ultrasonic receiving component receives the ultrasonic signal returned after the ultrasonic signal collides with a target object and outputs the returned ultrasonic signal to the control component.

S03: the control component calculates a distance between the terminal and the target object and feeds back the calculated distance to the user.

In particular, the ultrasonic signal is output from the terminal to direct towards the target object, and then is returned to the terminal along an opposite direction after the ultrasonic signal collides with the target object; after the ultrasonic receiving component receives the returned ultrasonic signal, the ultrasonic receiving component outputs the returned ultrasonic signal to the control component. When receiving the returned ultrasonic signal, the control component starts to calculate the distance between the terminal and the target object. The method for the control component to calculate the distance between the terminal and the target object is correlated with the state information of the user and the preset rule for outputting the ultrasonic signal. The principle to calculate the distance between the terminal and the target object mainly is to: multiply a time difference between a time of outputting the ultrasonic signal and a time of receiving the returned ultrasonic signal by an ultrasonic speed to obtain a total distance travelled by the ultrasonic signal from the time of outputting from the terminal to the time of returning to the terminal after the ultrasonic signal collides with the target object; then, calculate the distance between the terminal and the target object according to the total distance travelled by the ultrasonic signal. It should be noted that the ultrasonic speed is closely related to an environment temperature; the environment temperature may be acquired from an existing device in the terminal or an external server, and the ultrasonic speed corresponding to the environment speed is applied to the calculation of the distance.

After the control component calculates the distance, the control component feeds back the distance to the user through voice broadcast or interface display and the like.

In this embodiment, when the control component receives the ranging instruction, the control component acquires the state information of the user and controls the driving component to drive the vibrating component to output the ultrasonic signal based on the preset rule; then the ultrasonic receiving component receives the ultrasonic signal returned after the ultrasonic signal collides with the target object, and outputs the returned ultrasonic signal to the control component; finally the control component calculates the distance between the terminal and the target object and feeds back the calculated distance to the user. The method for ranging using the terminal according to this embodiment based on the above terminal acquires the state information of the user and controls the driving component to drive the vibrating component to output the ultrasonic signal based on the preset rule, wherein the control component calculates the distance by reference to the state information of the user and the preset rule for outputting an ultrasonic signal; compared with the method for ranging in the related art in which the ultrasonic signal is sent in a single manner, the method for ranging provided in this embodiment is more accurate.

In an example embodiment of the disclosure, while controlling the driving component to drive the vibrating component to output the ultrasonic signal based on the preset rule, the control component records a power of the output ultrasonic signal; then, the control component sends the power of the output ultrasonic signal to the ultrasonic receiving component to save, and the ultrasonic receiving component only receives the returned ultrasonic signal matched with the power of the output ultrasonic signal saved.

In this embodiment, the ultrasonic receiving component identifies whether the returned ultrasonic signal is matched with the output ultrasonic signal by comparing the power of the output ultrasonic signal with the power of the returned ultrasonic signal; therefore, this embodiment can eliminate environment interference and receive the returned ultrasonic signal more accurately, making the calculating of distance more accurate.

In an example embodiment of the disclosure, the control component may also be provided with an alert function, for example, providing a setting interface for the user to set an alert value in advance, that is, when the calculated distance is greater than or equal to the alert value, the control component controls a start of prompt tone or prompt light.

For the alert function provided in the control component in this embodiment, in some conditions the user does not need to know the specific value of the distance but only to know whether the distance is greater than or less a certain value, and it is needed to give an alert in this condition; the alert function provided in this embodiment is more convenient for a user to use and meanwhile plays the alert function.

Refer to Fig. 7, which is a method for ranging using a terminal according to a second embodiment of the disclosure, a difference between this embodiment and the first embodiment lies in that, based on the first embodiment, the step that the control component acquires the state information of the user and controls the driving component to drive the vibrating component to output the ultrasonic signal based on the preset rule when the control component receives the ranging instruction includes:
S11: the control component controls the vibrating component to output the ultrasonic signal at a regular time, identifies a movement state of the user and acquires in real time a movement speed and movement direction of the user, when the control component receives the ranging instruction.

When the control component receives the ranging instruction, the control component controls the driving component to drive the vibrating component to output the ultrasonic signal at the regular time, that is, output the ultrasonic signal every time interval t, the control component may calculate a plurality of distances according to a plurality of output ultrasonic signals, and then checks the accurate distance according to the plurality of calculated distances.

At the same time, the control component identifies the movement state of the user, that is, identifies whether the user is in the movement state, and the control component acquires in real time the movement speed V_{P} and movement direction of the user. For example, the control component controls a start of an acceleration sensor which is configured to record the movement speed of the user in the terminal, then the acceleration sensor outputs the recorded movement speed of the user to the control component; if the movement speed received by the control component is greater than 0, the control component identifies that the user is in the movement state; otherwise, the control component identifies that the user is in a non-movement state. The controller controls a start of a geomagnetic sensor which is configured to record the movement direction of the user in the terminal, then the geomagnetic sensor outputs the recorded movement direction of the user to the controller, and the controller acquires in real time the movement speed V_{P} and movement direction of the user and saves the movement speed and movement direction of the user.

In this embodiment, when the control component receives the ranging instruction, the control component controls the vibrating component to output the ultrasonic signal at the regular time, identifies the movement state of the user and acquires in real time the movement speed and movement direction of the user. Compared with the related art, no matter whether the user or target object is moveable, the control component in this embodiment controls the driving component to drive the vibrating component to output the ultrasonic signal at the regular time, calculates a plurality of distances according to a plurality of output ultrasonic signals, checks the accurate distance according to the plurality of calculated distances; therefore, this embodiment calculates a distance more accurately.

In an example embodiment of the disclosure, the step that the control component calculates the distance between the terminal and the target object includes:
when the user is in the movement state, the control component calculates a first time difference between a time of outputting the ultrasonic signal and a time of receiving the returned ultrasonic signal; and
the control component calculates the distance according to the movement speed and movement direction of the user, the first time difference and the ultrasonic speed.

When the user is in the movement state, the ultrasonic receiving component receives the ultrasonic signal returned after the ultrasonic signal collides with the target object and outputs the returned ultrasonic signal to a control component; at this time, the control component records a return time of the returned ultrasonic signal while receiving the returned ultrasonic signal output by the ultrasonic receiving component, and calculates a first difference Δt between the time of outputting the ultrasonic signal and the time of receiving the returned ultrasonic signal.

If the movement direction of the user acquired by the controller is the same as the output direction of the ultrasonic signal (that is, the movement direction of the user is towards the target object), the controller calculates the distance at the moment when the terminal receives the returned ultrasonic signal using the formula 1/2×(Δt×V_{S}-Δt×V_{P}).

If the movement direction of the user acquired by the controller is opposite the output direction of the ultrasonic signal (that is, the movement direction of the user is far away from the target object), the controller calculates the distance at the moment when the terminal receives the returned ultrasonic signal using the formula1/2×(Δt×V_{S}-Δt×V_{P}), where involved parameters include a movement speed V_{P}, a first difference Δt and an ultrasonic speed Vs.

This embodiment can accurately calculate the distance at the moment when the terminal receives the returned ultrasonic signal when the user is in the movement state, based on the movement speed V_{P} and movement direction of the user, the difference Δt and the ultrasonic speed V_{S} acquired by the controller. Compared with the related art, this embodiment calculates the distance more accurately.

In an example embodiment of the disclosure, the step that the control component calculates the distance between the terminal and the target object includes:
when the user is in the non-movement state, the control component receives two adjacent ultrasonic signals output by the ultrasonic receiving component returned after the ultrasonic signal collides with the target object, the two returned ultrasonic signals respectively being a first ultrasonic signal and a second ultrasonic signal, an outputting time of the first ultrasonic signal being earlier than an outputting time of the second ultrasonic signal by a time interval;
the control component calculates a second time difference between the time of outputting the first ultrasonic signal and the time of receiving the returned first ultrasonic signal and a third time difference between the time of outputting the second ultrasonic signal and the time of receiving the returned second ultrasonic signal; and
the control component calculates the distance according to the second time difference, the third time difference, the time interval and the ultrasonic speed.

When the user is in a non-movement state, the ultrasonic receiving component receives two adjacent ultrasonic signals returned after the ultrasonic signal collides with the target object and outputs the two returned ultrasonic signals to the control component, the two returned ultrasonic signals respectively being the first ultrasonic signal and the second ultrasonic signal, wherein the outputting time of the first ultrasonic signal is earlier than the outputting time of the second ultrasonic signal by a time interval t, that is, the output time interval between the first ultrasonic signal and the second ultrasonic signal is t, and the return time interval to the terminal should be t too. At this time, the control component records a return time of the first ultrasonic signal and the second ultrasonic signal when receiving the first ultrasonic signal and the second ultrasonic signal output by the ultrasonic receiving component, calculates a second time difference Δt₁ between the time of outputting the first ultrasonic signal and the time of receiving the returned first ultrasonic signal, a third time difference Δt₂ between the time of outputting the second ultrasonic signal and the time of receiving the returned second ultrasonic signal.

The control component calculates the distance at the moment when the user receives the returned ultrasonic signal using the formula Δt×V_{S}×((t+Δt₂-Δt₁)/ (2t+Δt₂-Δt₁)), wherein involved parameters include a second time difference Δt₁, a third time difference Δt₂, a time interval t and an ultrasonic speed Vs.

It should be noted that, no matter the target object is moveable, the above formula Δt× V_{S}×((t+Δt₂-Ati)/ (2t+Δt₂-Δt₁)) is applicable; when the target object is still, Δt₁=Δt₂.

When the user is in the non-moveable state, no matter the target object is moveable, this embodiment can check the distance by calculating the distance at the moment when the terminal receives the returned ultrasonic signal for several times; compared with the related art, this embodiment calculates a distance more accurately.

The above are simply the example embodiments of the disclosure and are not intended to limit the patent scope of the disclosure. Any equivalent structures or equivalent flow modifications made according to the description and the accompanying drawings of the disclosure, or any equivalent structures or equivalent flow modifications applied in other relevant technical fields directly or indirectly are intended to be included in the patent protection scope of the disclosure.

### Industrial Applicability

As described above, a terminal and the method for ranging using the terminal according to the embodiments of the disclosure have advantages as follows: all hardware structures needed by the terminal to measure a distance are arranged in an electro-acoustic transducer, utilizing the structure features of the electro-acoustic transducer in the terminal, thereby making the terminal capable of measuring a distance using an ultrasonic wave without an external ultrasonic transceiving device; therefore, it is more convenient for the terminal to measure the distance.

## Claims

1. A terminal, comprising: an electro-acoustic transducer, wherein the electro-acoustic transducer comprises:
a shell;
a vibrating component, which is arranged in the shell and is configured to output an ultrasonic signal;
a driving component, which is connected with the vibrating component and is configured to drive the vibrating component to output the ultrasonic signal;
an ultrasonic receiving component, which is arranged in the shell and is configured to receive an ultrasonic signal returned after the ultrasonic signal collides with a target object and output the returned ultrasonic signal to a control component; and
the control component, which is configured to receive a ranging instruction, control the driving component to drive the vibrating component to output the ultrasonic signal, receive the returned ultrasonic signal, after the ultrasonic signal collides with a target object, output by the ultrasonic receiving component, and calculate a distance between the terminal and the target object.

2. The terminal as claimed in claim 1, wherein the driving component comprises an ultrasonic voice coil and an ultrasonic magnetic driver, wherein the ultrasonic voice coil is connected with the vibrating component and is configured to drive the vibrating component to output the ultrasonic signal and the ultrasonic magnetic driver is matched with the ultrasonic voice coil and is configured to drive the ultrasonic voice coil to vibrate.

3. The terminal as claimed in claim 1 or 2, wherein the vibrating component comprises an ultrasonic vibrating diaphragm, which outputs the ultrasonic signal by vibration.

4. The terminal as claimed in claim 3, wherein the electro-acoustic transducer comprises an audible sound vibrating diaphragm, which is arranged in parallel to the ultrasonic vibrating diaphragm or into which the ultrasonic vibrating diaphragm is embedded.

5. The terminal as claimed in claim 4, wherein the ultrasonic vibrating diaphragm and the audible sound vibrating diaphragm are concentric and a through hole is opened on the audible sound vibrating diaphragm, wherein a shape of the through hole and an area of the through hole are the same as a shape of the ultrasonic vibrating diaphragm and an area of the ultrasonic vibrating diaphragm.

6. The terminal as claimed in any one of claims 1, 2, 4, or 5, wherein the ultrasonic receiving component comprises a metallic receiving plate, which is configured to receive the returned ultrasonic signal and which is embedded into the shell or integrated with the shell.

7. A method for ranging using a terminal, comprising:
when receiving a ranging instruction, a control component acquiring state information of a user and controlling a driving component to drive a vibrating component to output, according to a preset rule, an ultrasonic signal;
an ultrasonic receiving component receiving an ultrasonic signal returned after the output ultrasonic signal collides with a target object and outputting the returned ultrasonic signal to the control component; and
the control component calculating a distance between the terminal and the target object and feeding back the calculated distance to the user.

8. The method as claimed in claim 7, wherein when receiving a ranging instruction, the control component acquiring the state information of the user and controlling the driving component to drive the vibrating component to output, according to the preset rule, the output ultrasonic signal comprises:
when receiving the ranging instruction, the control component controlling the vibrating component to output the ultrasonic signal at a regular time, identifying a movement state of the user and acquiring in real time a movement speed and a movement direction of the user.

9. The method as claimed in claim 8, wherein the control component calculating the distance between the terminal and the target object comprises:
the control component calculating, when the user is in the movement state, a first time difference between a time of outputting the output ultrasonic signal and a time of receiving the returned ultrasonic signal; and
the control component calculating the distance according to the movement speed and movement direction of the user, the first time difference and an ultrasonic speed.

10. The method as claimed in claim 8 or 9, wherein the control component calculating the distance between the terminal and the target object comprises:
the control component receiving, when the user is in a non-movement state, two adjacent returned ultrasonic signals output by the ultrasonic receiving component, wherein the two returned ultrasonic signals are respectively called a first ultrasonic signal and a second ultrasonic signal, an outputting time of the first ultrasonic signal is earlier than an outputting time of the second ultrasonic signal by a time interval;
the control component calculating a second time difference between the time of outputting the first ultrasonic signal and a time of receiving the returned first ultrasonic signal and a third time difference between the time of outputting the second ultrasonic signal and a time of receiving the returned second ultrasonic signal; and
the control component calculating the distance according to the second time difference, the third time difference, the time interval and an ultrasonic speed.
